# EUROPEAN PATENT APPLICATION

(11) **EP 4 456 613 A1**
(43) Date of publication of application: **30.10.2024**
(21) Application number: 24168259.0
(22) Date of filing: 03.04.2024
(51) Int. Cl.: H04W 52/14, H04W 52/24, H04W 52/28, H04W 52/36, H04W 52/40, H04L 27/26

(54) **PUSCH DWS WITH BACK-TO-BACK MTRP TRANSMISSION**

(30) Priority: 18.04.2023 US 202363460182 P
(71) Applicant: Nokia Technologies Oy, 02610 Espoo (FI)
(72) Inventor: SAAD, Majed, Massy (FR); KASAN, Karim, Massy (FR); NHAN, Nhat-Quang, Reims (FR); AHMADIAN TEHRANI, Amir Mehdi, Munich (DE); MASO, Marco, Issy les Moulineaux (FR); MARCONE, Alessio, Munich (DE)
(74) Representative: Script Intellectual Property LLP

(57) **Abstract**

An apparatus configured to: transmit, to a base station, a capability related to mTRP operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receive, from the base station, a sixth indication of at least one waveform for use during one or more respective transmissions of a plurality of PUSCH transmissions; and receive, from the base station, an uplink configuration for the plurality of PUSCH transmissions.

## Description

### TECHNICAL FIELD

The example and non-limiting embodiments relate generally to physical uplink shared channel (PUSCH) transmission to multiple transmission points and, more particularly, to switching of the transmit power of the UE between transmissions.

### BACKGROUND

It is known, in PUSCH communication, to support DFT-s-OFDM and CP-OFDM waveforms.

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: transmit, to a base station, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receive, from the base station, a sixth indication of at least one waveform for use during one or more respective transmissions of a plurality of physical uplink shared channel transmissions; and receive, from the base station, an uplink configuration for the plurality of physical uplink shared channel transmissions.

In accordance with one aspect, a method comprising: transmitting, with a user equipment to a base station, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receiving, from the base station, a sixth indication of at least one waveform for use during one or more respective transmissions of a plurality of physical uplink shared channel transmissions; and receiving, from the base station, an uplink configuration for the plurality of physical uplink shared channel transmissions.

In accordance with one aspect, an apparatus comprising means for performing: transmitting, to a base station, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receiving, from the base station, a sixth indication of at least one waveform for use during one or more respective transmissions of a plurality of physical uplink shared channel transmissions; and receiving, from the base station, an uplink configuration for the plurality of physical uplink shared channel transmissions.

In accordance with one aspect, a non-transitory computer-readable medium comprising program instructions stored thereon for performing at least the following: causing transmitting, to a base station, of a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; causing receiving, from the base station, of a sixth indication of at least one waveform for use during one or more respective transmissions of a plurality of physical uplink shared channel transmissions; and causing receiving, from the base station, of an uplink configuration for the plurality of physical uplink shared channel transmissions.

In accordance with one aspect, an apparatus comprising: at least one processor; and at least one memory storing instructions that, when executed by the at least one processor, cause the apparatus at least to: receive, from a user equipment, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and/or reception point operation; determine at least one waveform for use during one or more respective transmissions of a plurality of physical uplink shared channel transmissions based, at least partially, on the received capability; transmit, to the user equipment, a sixth indication of the at least one determined waveform; and transmit, to the user equipment, an uplink configuration for the plurality of physical uplink shared channel transmissions.

In accordance with one aspect, a method comprising: receiving, with a base station from a user equipment, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; transmitting, to the user equipment, a sixth indication of the at least one determined waveform; and transmitting, to the user equipment, an uplink configuration for the plurality of physical uplink shared channel transmissions.

In accordance with one aspect, an apparatus comprising means for performing: receiving, from a user equipment, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; transmitting, to the user equipment, a sixth indication of the at least one determined waveform; and transmitting, to the user equipment, an uplink configuration for the plurality of physical uplink shared channel transmissions.

In accordance with one aspect, a non-transitory computer-readable medium comprising program instructions stored thereon for performing at least the following: causing receiving, from a user equipment, of a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; causing transmitting, to the user equipment, of a sixth indication of the at least one determined waveform; and causing transmitting, to the user equipment, of an uplink configuration for the plurality of physical uplink shared channel transmissions.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a flowchart illustrating steps as described herein; and
FIG. 5 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- CA: carrier aggregation
- CE: control element
- CP-OFDM: cyclic prefix orthogonal frequency division multiplexing
- cRAN: cloud radio access network
- CU: central unit
- DC: dual connectivity
- DCI: downlink control information
- DFT-s-OFDM: discrete Fourier transform spread orthogonal frequency division multiplexing
- DU: distributed unit
- DWS: dynamic waveform switching
- eNB (or eNodeB): evolved Node B (e.g., an LTE base station)
- EN-DC: LTE-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- IBO: input backoff for power amplifier
- I/F: interface
- L1: layer 1
- LTE: long term evolution
- MAC: medium access control
- MCS: modulation and coding scheme
- MME: mobility management entity
- MPR: maximum power reduction
- mTRP: multiple transmission and reception point
- NE-DC: NR-LTE dual connectivity
- ng or NG: new generation
- ng-eNB or NG-eNB: new generation eNB
- NR: new radio
- N/W or NW: network
- OBO: output backoff for power amplifier
- O-RAN: open radio access network
- PA: power amplifier
- PAPR: peak-to-average power ratio
- PAR: peak-to-average power ratio
- PDCP: packet data convergence protocol
- PH: power headroom
- PHR: power headroom report
- PHY: physical layer
- PRACH: physical random access channel
- PUSCH: physical uplink shared channel
- PUCCH: physical uplink control channel
- RACH: random access channel
- RAN: radio access network
- RB: resource block
- RF: radio frequency
- RLC: radio link control
- RRC: radio resource control
- RRH: remote radio head
- RS: reference signal
- RU: radio unit
- Rx: receiver
- SDAP: service data adaptation protocol
- SGW: serving gateway
- SMF: session management function
- SRS: sounding reference signal
- TDM: time division multiplexing
- TPC: transmit power control
- TRP: transmission reception point
- TS: technical specification
- Tx: transmitter
- UE: user equipment (e.g., a wireless, typically mobile device)
- UL: uplink
- UPF: user plane function
- VNR: virtualized network function
- WF: waveform
- WI: work item

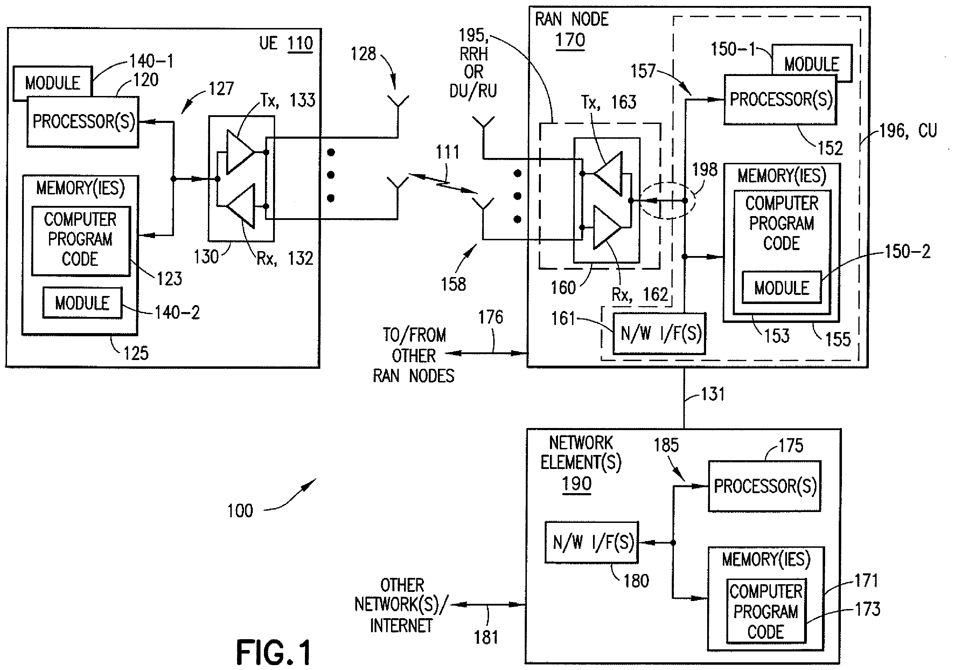

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to UL coverage enhancements. The objectives of the Rel-18 work item for UL coverage enhancements are as follows (RP-213579):
"...Specify following PRACH coverage enhancements (RAN1, RAN2)
   Multiple PRACH transmissions with same beams for 4-step RACH procedure
   Study, and if justified, specify PRACH transmissions with different beams for 4-step RACH procedure
   Note 1: The enhancements of PRACH are targeting for FR2, and can also apply to FR1 when applicable.
   Note 2: The enhancements of PRACH are targeting short PRACH formats, and can also apply to other formats when applicable.
Study and, if necessary, specify following power domain enhancements
   Enhancements to realize increasing UE power high limit for CA and DC based on Rel-17 RAN4 work on "Increasing UE power high limit for CA and DC", in compliance with relevant regulations (RAN4, RANI)
   Enhancements to reduce MPR/PAR, including frequency domain spectrum shaping with and without spectrum extension for DFT-S-OFDM and tone reservation (RAN4, RANI)
   **Specify enhancements to support dynamic switching between DFT-S-OFDM and CP-OFDM (RANI)..."**

Tdocs have been submitted to RAN1#112. During RAN1#112, VIVO discussed the possibility of different waveforms, to different TRPs and multiple physical uplink shared channel (PUSCH) transmissions, scheduled by single DCI, for example in R1-2300481:
"...When DWS is indicated by DCI, the DCI may be used to indicate multiple PUSCH transmissions to different TRPs or on different cells. In this case, **it should be discussed whether same waveform is required to be supported for PUSCH transmissions for different TRPs or cells, or whether different waveforms can be signalled for different PUSCH transmissions independently.** In our view, it's not necessary to restrict same waveform for multiple PUSCH transmissions for different TRPs or cells as one UE may only have coverage issue for some of the TRPs/cells and DFT-s-OFDM may be preferred only for transmissions in cells in which UE has coverage issues..."

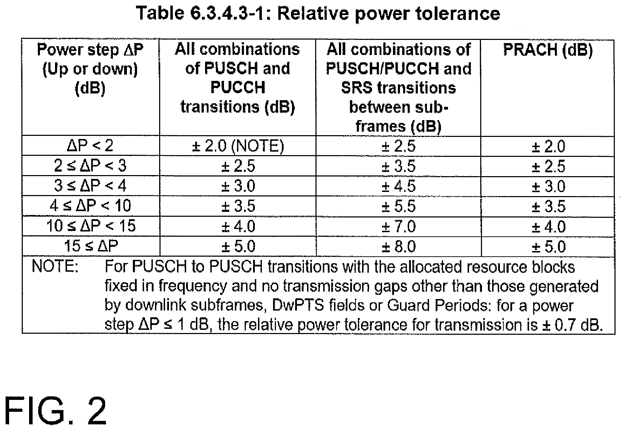

Features as described herein may generally relate to relative power tolerance (see, e.g., TS 38.101 section 6.3.4.3). The UE might transmit multiple physical uplink data channel (PUSCH) transmissions to multiple transmission and reception points (TRPs) in same or multiple cells. The relative power tolerance is the ability of the UE transmitter to set its output power in a target sub-frame (1 ms) relative to the power of the most recently transmitted reference sub-frame (1 ms) if the transmission gap between these sub-frames is less than or equal to 20 ms. The minimum requirements specified in Table 6.3.4.3-1 (see FIG. 2) apply when the power of the target and reference sub-frames are within the power range bounded by the minimum output power, as defined in clause 6.3.1, and the measured P_{UMAX}, as defined in clause 6.2.4.

To account for radio frequency (RF) power amplifier mode changes, two exceptions are allowed for each of two test patterns. The test patterns are where power is monotonically increasing during a power sweep, and where power is monotonically decreasing during a power sweep, over a range bounded by the requirements of minimum power and maximum power, specified in clauses 6.3.1 and 6.2.1, respectively. For those exceptions, the power tolerance limit is a maximum of ± 6.0 dB in Table 6.3.4.3-1 (see FIG. 2) . These exceptions account for the UE's power amplifier (PA) mode changes, for example during turning OFF/ON an additional PA stage.

Features as described herein may generally relate to the dual power amplifier (PA) architecture capability for dual connectivity (DC) and carrier aggregation (CA). The UE may indicate to the gNB that the UE supports dual PA for some intra-band New Radio carrier aggregation, for example LTE-NR dual connectivity (EN-DC) and NR-LTE dual connectivity (NE-DC) combinations. This is defined in TS 38.306 as follows:
"...For an intra-band combination, this field indicates the support of dual PAs. If absent in an intra-band combination, the UE supports single PA for all the ULs in the intra-band combination. For other band combinations, this field is not applicable.

This capability applies to:
- Intra-band (NG)EN-DC/NE-DC combination without additional inter-band NR and LTE CA component;
- Intra-band (NG)EN-DC/NE-DC combination supporting both UL and DL intra-band (NG)EN-DC/NE-DC parts with additional inter-band NR/LTE CA component;
- Inter-band (NG)EN-DC/NE-DC combination, where the frequency range of the E-UTRA band is a subset of the frequency range of the NR band (as specified in Table 5.5B.4.1-1 of TS 38.101-3 [4]).
If this capability is included in an "Intra-band (NG)EN-DC/NE-DC combination supporting both UL and DL intra-band (NG)EN-DC/NE-DC parts with additional inter-band NR/LTE CA component", this capability applies to the intra-band (NG) EN-DC/NE-DC BC part..."

Features as described herein may generally relate to dynamic switching, for example between waveforms (WF) such as discrete Fourier transform spread orthogonal frequency division multiplexing (DFT-s-OFDM) and cyclic prefix orthogonal frequency division multiplexing (CP-OFDM). DFT-S-OFDM may provide higher coverage and a lower/better peak-to-average power ratio (PAPR), while CP-OFDM may provide higher throughput.

For the objective of specifying enhancements to support dynamic switching between DFT-s-OFDM and CP-OFDM, the application of different WFs (e.g. DFT-s-OFDM, CP-OFDM) to different transmission reception points (TRP) is proposed by some companies during RAN1#111 (e.g., R1-2211035 VIVO Tdoc). For clarification, the TRP may be on different positions (e.g. geographically separated), facing different channels conditions and/or path losses. Accordingly, a UE may be in poor coverage with respect to one TRP, and in good coverage with respect to another TRP.

The current specifications support back-to-back PUSCH for different (e.g. multiple) TRP with time multiplexing where all transmissions are using the same waveform, without dynamic waveform switching (DWS). However, if different WFs are used with back-to-back PUSCH transmissions for different TRP, then the UE may not be able to fully exploit the DFT-s-OFDM advantage after CP-OFDM transmission to another TRP.

In back-to-back PUSCH, the PUSCH may immediately follow one another (e.g. continuous, sequential, serial). However, in an example, back-to-back PUSCH may or may not be separated by a DL symbol. Back-to-back PUSCH may comprise consecutive UL symbols, regardless of whether there are some DL symbols in between. In other words, back-to-back PUSCH may be continuous (i.e. no transmission gap and all consecutive symbols are UL) or not continuous. Alternatively, back-to-back PUSCH may be performed with or without a transmission gap.

In an example, a UE may be capable of transmitting PUSCH to two TRPs that are geographically separated. A first TRP may require DFT-s-OFDM, while a second TRP may require CP-OFDM. However, a switch from a CP-OFDM PUSCH transmission towards one TRP to DFT-s-OFDM PUSCH transmissions towards another TRP might require a high UE transmit power change. Such a power change might be not fully/completely fulfilled by the current relative power tolerance requirements. As a result, if the UE is not able to transmit with a target power, then the gain of dynamic waveform switching might be reduced (or negative) and a ping-pong between DFT-S-OFDM and CP-OFDM might be incurred.

This issue would depend mainly on whether the transmission gap between these sub-frames for different TRPs is less than or equal to 20 ms, which is a common case with time division multiplexed (TDM) PUSCH in multiple transmission and reception point (mTRP). It is clear that the relative power tolerance in the specifications considers only monotonic power sweeping while defining the relative power tolerance values in Table 6.3.4.3-1 (see FIG. 2) to account for RF power amplifier mode changes, even with the same waveform having the same input backoff (IBO) and/or output backoff (OBO) for PA. Hence, the non-monotonic power sweeping for UL back-to-back transmissions with mTRP could lead to smaller tolerance values (e.g. larger gap between power step deltaP (i.e. change in power) and relative tolerance), or allowing more than the two current exceptions for the UE implementation considered with monotonic sweeping. Thus, this may make DWS to DFT-s-OFDM, for some TRPs with back-to-back PUSCH transmissions, or ping-pong DWS, less efficient without UE assistance. For back-to-back PUSCH for different TRPs, the ping-pong DWS may limit the coverage enhancement with DFT-s-OFDM due to smaller relative power tolerance, especially with non-monotonic power increase/decrease.

In the present disclosure, a reception point may also be understood as, and referred to as, a transmission point. In the present disclosure, a mTRP may also be understood as, and referred to as, a transmission point, a reception point, or both.

The mTRP may indicate the capability of a transmission and reception point. The capability may include any of the following, performed at one time or at different time: one or more transmissions, one or more receptions, both one or more transmissions and one or more receptions.

It may be noted that the available relative power tolerance defined with monotonic power sweeping may already be fully used in mTRP back-to-back transmissions, with the closed loop power control or transmit power control (TPC) setting different transmit power for UL transmissions to different TRPs. In TS 38.213, the TPC value for accumulated delta power is up to 3dB, while the absolute is 4dB, and thus some TPC within 20ms may already be reaching the maximum 6dB relative power tolerance. However, this may not be a critical issue in DWS without back-to-back mTRP, since the UE may be in poor coverage for a certain duration, and may profit from power boosting due to lower IBO/OBO with DFT-s-OFDM progressively with time, and there is no ping-pong DWS or non-monotonic power sweeping in a small time frame (or they are less frequent than back-to-back PUSCH in mTRP) .

A technical effect of example embodiments of the present disclosure may be to assist a gNB in deciding about the effectiveness of DWS in the case of back-to-back mTRP. A technical effect of example embodiments of the present disclosure may be to avoid ping-pong DWS for one or more TRPs (or jointly for all TRPs) . A technical effect of example embodiments of the present disclosure may be to allow DWS for some TRPs in poor coverage.

In an example embodiment, a UE capability for non-monotonic sweep during a short duration, especially for mTRP back-to-back PUSCH, may be determined. In an example embodiment, the UE may determine, and/or indicate to the gNB, its capability with respect to the duration to achieve a target delta-power (which may be pre-defined, or indicated by the gNB earlier) considering non-monotonic power sweep or a minimum duration. Within that duration, the gNB may determine to keep the same WF. A technical effect of keeping the same WF during the duration to achieve a target delta-power (especially for DFT-s-OFDM) may be to avoid the ping-pong switching issue and to achieve progressively a target power after DWS.

Additionally or alternatively, the UE may indicate its relative power tolerance for a target deltaPower with non-monotonic power sweep mainly within a predefined duration, for example <= 20ms, like current specifications for monotonic power sweep. The relative power tolerance may be a minimum relative power tolerance, or may be a maximum power tolerance. The indication of the relative power tolerance indication may be the minimum absolute power change that the UE can provide/guarantee with a target power change deltaP.

In the present disclosure, the terms "deltaP," "deltaPower," "power step," and "target delta-power" may be used interchangeably. The power step may be a positive/up change in power, or a negative/down change in power.

Additionally or alternatively, the specifications may define the relative power tolerance for the UE with non-monotonic power sweep during a predefined duration, for example <=20ms, like current specifications for the monotonic case.

Additionally or alternatively, the UE may indicate if mTRP UL transmissions are to be made using a common/shared PA or independent PAs (e.g. separate PA per TRP) to assess DWS jointly for all TRPs. In other words, the UE may indicate its PA configuration/capabilities. In an example embodiment, it may be assumed that UEs may have different PA architecture to use in UL transmissions for mTRP that may eliminate the non-monotonic power sweep with mTRP transmissions. For example, each mTRP may be served by a different PA, and relative power tolerance may apply independently per TRP (i.e. monotonic power sweep may be used per PA). In this case, the DWS decision may be equivalent to a non-mTRP use case.

In an example embodiment, the DWS instant for mTRP back-to-back PUSCH may be determined. In an example embodiment, a UE may determine and/or indicate the preferred/possible instant(s) for DWS with mTRP. This determination may be based on path losses to TRPs, or power headroom (PH), or their variation for at least one TRP or all TRPs.

In an example embodiment, the UE may determine at least one instant for DWS based, at least partially, on whether a path loss to one or more TRPs is greater than a threshold. In other words, if the condition is satisfied, the DWS time instant may be determined by the UE based on the capability of the UE, and the UE indication may be transmitted. If the condition is not satisfied, there may be no DWS. A technical effect of example embodiments of the present disclosure may be to ensure that the preferred/possible time location of the DWS is different when the condition is true, compared to the preferred/possible time location of the DWS when the condition is false. For example, when the condition is true, the indication of the DWS time instant by the UE may guarantee that the minimum duration to reach a target power is achieved (e.g. the UE may consider its capability and the PL or required power difference between TRPs while determining this instant). For example, when the condition is false, the UE and the NW may know that all UE-TRP links are in good coverage, and thus the NW may decide whether to perform DWS or not, mainly for all TRPs (e.g. it may keep/switch to CP-OFDM to use 2 layers in MIMO for higher data rate, or keep/switch to DFT-s-OFDM to save UE power).

Additionally or alternatively, the UE may determine at least one instant for DWS based, at least partially, on whether PH for one or more TRP is below a threshold with current waveform.

Additionally or alternatively, the UE may determine at least one instant for DWS based, at least partially, on whether the variation of PH or path losses indicates that the UE could be in poor coverage for one or more TRP after a certain duration. A high variation of a PH/PL may indicate that there might be some occurrences of poor coverage, but it may not necessarily indicate that the UE is in poor coverage on average. The UE may determine at least one instant for DWS based on a variation trend or average, rather than a single variation value. For example, if the PL trend on average is increasing, the UE may be moving away from this TRP.

In an example embodiment, the UE may request DWS to DFT-s-OFDM for at least one TRP, and vice versa (i.e. DWS to CP-OFDM).

In an example embodiment, the gNB may indicate and/or confirm DWS for at least one TRP.

In an example embodiment, the UE may apply DWS for mTRP in the next UL configured transmissions.

In an alternative example embodiment, the UE may send its enhanced PHR for mTRP (and/or legacy PHR) or relevant signal to evaluate path losses at the gNB. In an example embodiment, the gNB may evaluate one or more of the aforementioned conditions, and may consider the new UE capability, mentioned above, to assess when the DWS may occur without a ping-pong issue and achieve progressively a target power after DWS. In an example embodiment, the gNB may determine a DWS instant for one or more TRPs and indicate it to the UE. In an example embodiment, the UE may apply DWS for mTRP in the next UL configured transmissions.

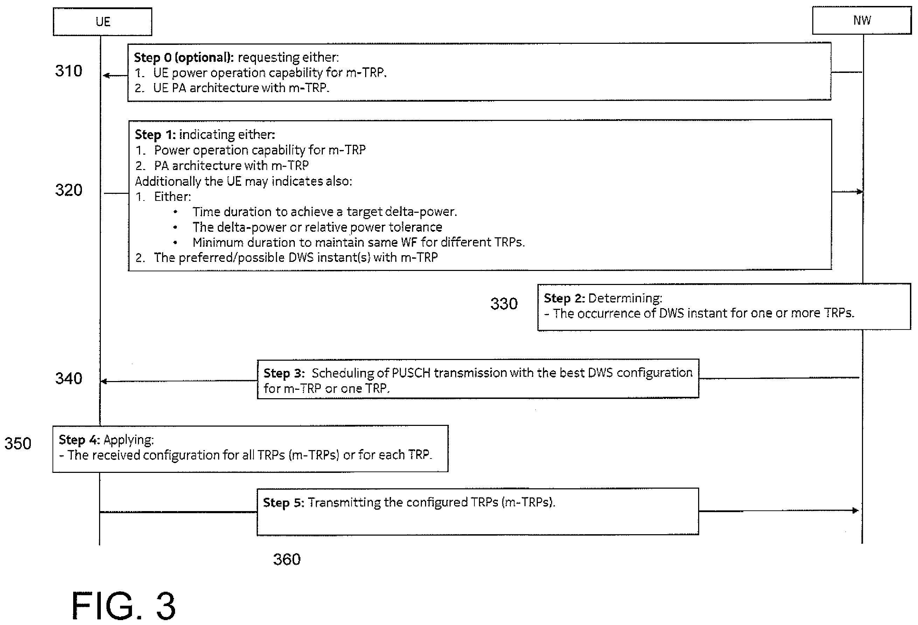

Referring now to FIG. 3, illustrated is a signaling diagram showing an example embodiment of the present disclosure. At 310, the NW may request the UE to report its power operation capability for mTRP. Additionally or alternatively, the NW may request the UE to provide assistance information about its PA architecture with mTRP.

At 320, the UE may determine and/or indicate the UE capability and/or assistance information concerning the PA architecture with mTRP, or supported power modes with mTRP. For example, the UE may indicate, to the NW, a power operation capability for m-TRP. For example, the UE may indicate, to the NW, a PA architecture with m-TRP. Additionally, the UE may indicate a time duration to achieve a target delta power. The target power change may be a power step up or a power step down. Alternatively, the UE may indicate the delta-power or relative power tolerance. Alternatively, the UE may indicate the minimum duration to maintain same WF for different TRPs. In other words, the UE may indicate a time duration during which waveform changes may need to be avoided by the gNB/TRP during mTRP transmissions. Additionally, the UE may indicate the preferred/possible DWS instant(s) with m-TRP.

In an example, the m-TRP in the network may be non-collocated. For example, it may be supported by distributed stations to operate in non-ideal backhaul, where the UE may receive each PUSCH configuration by the corresponding TRP (multi-DCI) or by one of them (single-DCI).

In an example embodiment, a time duration to reach at least one target power change and a time duration during which a waveform is to be maintained may be the same time duration (i.e. of equal duration). For example, if the target power change and configuration after DWS is known by the UE, the two time duration may be equal/the same. Otherwise, the UE may indicate a duration based on some assumptions (e.g. same configuration after DWS) or average/worst-case scenario. Thus, the indicated time duration to maintain a waveform may be different from the first duration to reach a specific target power

In an example embodiment, the specifications may define a relative power tolerance with non-monotonic power sweep (e.g. a target power change) for a time frame, and the UE may indicate its capability for this power operation mode. If the NW does not receive this capability indication from the UE, the NW may assume that it is not supported (i.e. the relative power tolerance as per legacy requirements is applicable), or may consider other alternative indication(s). In other words, the absence of a capability indication from the UE may inform the NW that the power operation mode is not supported by the UE. A technical effect of this example embodiment may be to provide backward compatibility.

In another example embodiment, the UE may determine and/or indicate its PA architecture for mTRP transmission (i.e. common/shared PA or independent PAs per TRP). The existing "dualPA-Architecture" in the specification for CA/DC may be updated to consider the mTRP case, or a new field may be defined (i.e. new information element for UE capability indication). If the NW does not receive this capability indication from the UE, then the NW may assume that it is not supported, or may consider other alternative indication(s). In other words, the absence of a PA architecture indication from the UE may inform the NW that PA architecture for mTRP transmission is not supported.

In another example embodiment, the UE may determine and/or indicate to the gNB at least one of: (1) the required time duration to achieve a target delta-power compared to previous UL slot; (2) the maximum/minimum relative power tolerance (delta-power) with non-monotonic power sweep during a pre-defined time frame/duration, or a relative power tolerance for a specific target delta-power; and/or (3) a minimum duration to maintain the same WF for all back-to-back PUSCH transmission for different TRPs, especially for DFT-s-OFDM after a DWS, in order to achieve the intended IBO/OBO/MPR and target power adaptation and/or avoid ping-pong behavior. The time duration to achieve the target delta power may be a set of time durations and a set of target delta powers, where there is a mapping between each target delta power value/range and a time duration value. The target delta-power may be a change in decibels.

In an example embodiment, the UE may determine and/or indicate the preferred/possible instant(s) for DWS with mTRP. This determination may be based on path loss, or PH, or their variation for at least one TRP or all TRPs. For example, the preferred/possible instant(s) for DWS with mTRP may be determined based on whether path loss to at least one TRP is greater than a threshold, or maximum path loss for all TRPs is greater than a threshold, or other operation using the path losses for all TRPs. For example, the preferred/possible instant(s) for DWS with mTRP may be determined based on whether PH for one or more TRP is below a threshold with the current waveform, or the minimum PH for at least one TRP is below a threshold. For example, the preferred/possible instant(s) for DWS with mTRP may be determined based on whether the variation of PH or path losses indicates that the UE may be in poor coverage for one or more TRP, after a certain duration.

In another example embodiment, the UE may indicate whether the UE is capable of achieving a predetermined relative power tolerance during a predetermined time duration (for non-monotonic power sweep) during mTRP transmissions.

Referring now to FIG. 3, at 330, the NW may receive at least one of the aforementioned indication(s), and may determine when DWS for mTRP may occur (i.e. DWS instant for one or more TRPs) without a ping-pong issue and to achieve the target power after DWS by UE hardware.

The determination of a DWS instant for at least one TRP, especially if it is not indicated by UE, may be based on whether path loss to at least one TRP is greater than a threshold, or maximum path loss for all TRPs is greater than a threshold, or other operation using the path losses for all TRPs. Additionally or alternatively, the determination of a DWS instant for at least one TRP may be based on whether PH for one or more TRP is below a threshold with the current waveform, or the minimum PH for at least one TRP is below a threshold. Additionally or alternatively, the determination of a DWS instant for at least one TRP may be based on whether the variation of PH or path losses indicates that the UE may be in poor coverage for one or more TRP, after a certain duration.

At 340, the NW may schedule physical uplink shared channel (PUSCH) transmission(s) for m-TRP or one TRP. The scheduling may be based on the determined waveform corresponding to a least one of the plurality of multiple transmission-reception points (mTRPs). A technical effect of this scheduling may be to include power control to exploit new/better UE power capabilities. The NW may optimize the configuration (e.g. MCS, #RB, etc.) and perform the closed-loop power control, even after 360, based on these UE capabilities and other UE assistance information. The scheduled UL newly configured m-TRPs may be ordered with respect to the required power (e.g. maximum to minimum power order). A technical effect of this ordering may be to sustain the monotonically increasing/decreasing of the power.

In an example embodiment, the NW may indicate, to the UE, the waveforms to be used by the UE during the multiple PUSCH transmissions, wherein the waveforms may comprise DFT-S-OFDM or CP-OPDM, and wherein the waveforms may be changed during the multiple PUSCH transmissions (from CP-OPDM to DFT-S-OFDM, or vice versa). In an example embodiment, the gNB/TRP may transmit, to the UE, an uplink grant for the multiple PUSCH transmissions.

At 350, the UE may apply the configured waveform for at least one TRP for the next UL configured transmissions. At 360, the UE may transmit PUSCH with the newly configured TRPs. In an example embodiment, the UE may transmit the multiple PUSCH transmissions to the multiple TRPs using the indicated waveforms.

A technical effect of example embodiments of the present disclosure may be to ensure that DWS to DFT-s-OFDM with back-to-back PUSCH in mTRP may achieve the intended power adaptation by the UE, and thus the coverage enhancement for one or more TRPs (or all TRPs).

A technical effect of example embodiments of the present disclosure may be to avoid non-useful DWS for one or more TRPs where the intended coverage enhancement cannot be achieved.

A technical effect of example embodiments of the present disclosure may be to avoid ping-pong DWS for one or more TRPs.

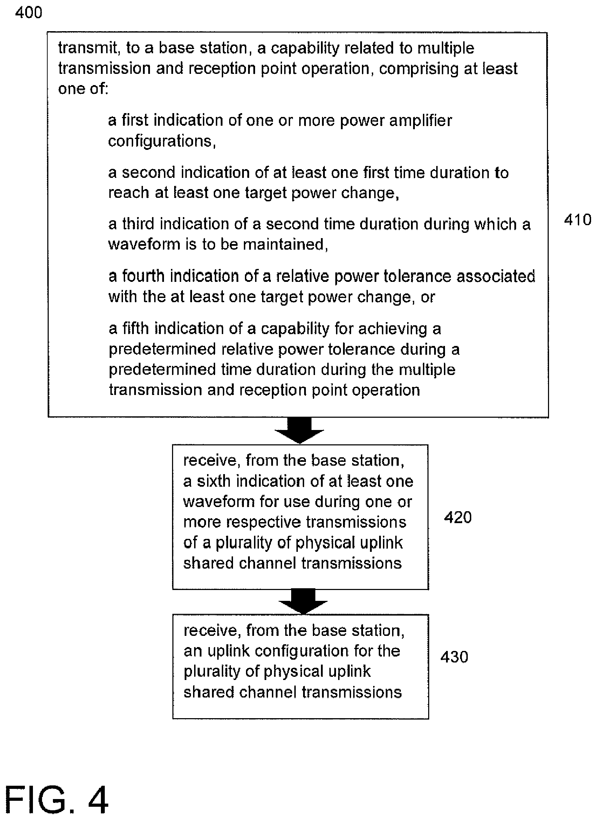

FIG. 4 illustrates the potential steps of an example method 400. The example method 400 may include: transmitting, to a base station, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation, 410; receiving, from the base station, a sixth indication of at least one waveform for use during one or more respective transmissions of a plurality of physical uplink shared channel transmissions, 420; and receiving, from the base station, an uplink configuration for the plurality of physical uplink shared channel transmissions, 430. The example method 400 may be performed, for example, with/by a UE. In an example embodiment, the sixth indication might be comprised/provided/transmitted in the uplink grant.

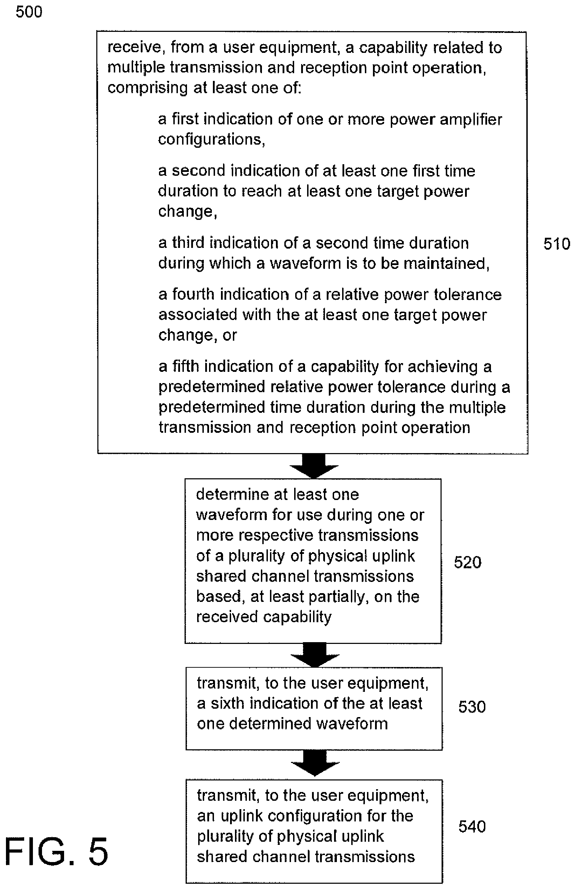

FIG. 5 illustrates the potential steps of an example method 500. The example method 500 may include: receiving, from a user equipment, a capability related to multiple transmission and reception point operation, comprising at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation, 410; determining at least one waveform for use during one or more respective transmissions of a plurality of physical uplink shared channel transmissions based, at least partially, on the received capability, 420; transmitting, to the user equipment, a sixth indication of the at least one determined waveform, 430; and transmitting, to the user equipment, an uplink configuration for the plurality of physical uplink shared channel transmissions, 440. The example method 500 may be performed, for example, with/by a network node, a base station, a gNB, etc.

In accordance with one example embodiment, an apparatus may comprise: at least one processor; and at least one memory storing instructions that, when executed by the at least one processor, cause the apparatus at least to: transmit, to a base station, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receive, from the base station, a sixth indication of at least one waveform for use during one or more respective transmissions of a plurality of physical uplink shared channel transmissions; and receive, from the base station, an uplink configuration for the plurality of physical uplink shared channel transmissions.

The example apparatus may be further configured to: transmit, to at least one of multiple transmission and reception points with the uplink configuration, the one or more respective transmissions of the plurality of physical uplink shared channel transmissions based, at least partially, on the sixth indication of the at least one waveform.

The transmitting of the plurality of physical uplink shared channel transmissions may comprise the example apparatus being further configured to: transmit, to a first transmission and reception point, a first physical uplink shared transmission with a first waveform; perform waveform switching; and transmit, to a second transmission and reception point, a second physical uplink shared transmission with a second waveform, wherein the first transmission and reception point may be at least partially different from the second transmission and reception point, wherein the first waveform may be at least partially different from the second waveform.

The transmitting to the first transmission and reception point and the transmitting to the second transmission and reception point may be performed with consecutive uplink transmissions.

The example apparatus may be further configured to: receive, from the base station, a request to report the capability related to the multiple transmission and reception point operation, wherein the capability related to the multiple transmission and reception point operation may be transmitted in response to the received request.

The example apparatus may be further configured to: determine at least one instant for waveform switching for the multiple transmission and reception point operation, wherein the at least one instant may be determined based on at least one of: a path loss for a transmission and reception point, a first threshold associated with the path loss for the transmission and reception point, a first variation associated with the path loss for the transmission and reception point, a maximum path loss for a plurality of transmission and reception points, a power headroom for the transmission and reception point, a second threshold associated with the power headroom for the transmission and reception point, a second variation associated with the power headroom for the transmission and reception point, or a minimum power headroom for the transmission and reception point; and transmit, to the base station, a seventh indication of the at least one instant for waveform switching.

The example apparatus may be further configured to: receive, from the base station, an eighth indication of at least one instant for waveform switching.

The plurality of physical uplink shared channel transmissions may be ordered for the multiple transmission and reception point operation based on a required power to sustain the at least one target power change.

The relative power tolerance associated with the at least one target power change may comprise at least one of: a maximum relative power tolerance, or a minimum relative power tolerance.

In accordance with one aspect, an example method may be provided comprising: transmitting, with a user equipment to a base station, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receiving, from the base station, a sixth indication of at least one waveform for use during one or more respective transmissions of a plurality of physical uplink shared channel transmissions; and receiving, from the base station, an uplink configuration for the plurality of physical uplink shared channel transmissions.

The example method may further comprise: transmitting, to at least one of multiple transmission and reception points with the uplink configuration, the one or more respective transmissions of the plurality of physical uplink shared channel transmissions based, at least partially, on the sixth indication of the at least one waveform.

The transmitting of the plurality of physical uplink shared channel transmissions may comprise: transmitting, to a first transmission and reception point, a first physical uplink shared transmission with a first waveform; performing waveform switching; and transmitting, to a second transmission and reception point, a second physical uplink shared transmission with a second waveform, wherein the first transmission and reception point may be at least partially different from the second transmission and reception point, wherein the first waveform may be at least partially different from the second waveform.

The transmitting to the first transmission and reception point and the transmitting to the second transmission and reception point may be performed with consecutive uplink transmissions.

The example method may further comprise: receiving, from the base station, a request to report the capability related to the multiple transmission and reception point operation, wherein the capability related to the multiple transmission and reception point operation may be transmitted in response to the received request.

The example method may further comprise: determining at least one instant for waveform switching for the multiple transmission and reception point operation, wherein the at least one instant may be determined based on at least one of: a path loss for a transmission and reception point, a first threshold associated with the path loss for the transmission and reception point, a first variation associated with the path loss for the transmission and reception point, a maximum path loss for a plurality of transmission and reception points, a power headroom for the transmission and reception point, a second threshold associated with the power headroom for the transmission and reception point, a second variation associated with the power headroom for the transmission and reception point, or a minimum power headroom for the transmission and reception point; and transmitting, to the base station, a seventh indication of the at least one instant for waveform switching.

The example method may further comprise: receiving, from the base station, an eighth indication of at least one instant for waveform switching.

The plurality of physical uplink shared channel transmissions may be ordered for the multiple transmission and reception point operation based on a required power to sustain the at least one target power change.

The relative power tolerance associated with the at least one target power change may comprise at least one of: a maximum relative power tolerance, or a minimum relative power tolerance.

In accordance with one example embodiment, an apparatus may comprise: circuitry configured to perform: transmitting, to a base station, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; circuitry configured to perform: receiving, from the base station, a sixth indication of at least one waveform for use during one or more respective transmissions of a plurality of physical uplink shared channel transmissions; and circuitry configured to perform: receiving, from the base station, an uplink configuration for the plurality of physical uplink shared channel transmissions.

In accordance with one example embodiment, an apparatus may comprise: processing circuitry; memory circuitry including computer program code, the memory circuitry and the computer program code configured to, with the processing circuitry, enable the apparatus to: transmit, to a base station, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receive, from the base station, a sixth indication of at least one waveform for use during one or more respective transmissions of a plurality of physical uplink shared channel transmissions; and receive, from the base station, an uplink configuration for the plurality of physical uplink shared channel transmissions.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: transmitting, to a base station, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; receiving, from the base station, a sixth indication of at least one waveform for use during one or more respective transmissions of a plurality of physical uplink shared channel transmissions; and receiving, from the base station, an uplink configuration for the plurality of physical uplink shared channel transmissions.

The means may be further configured to perform: transmitting, to at least one of multiple transmission and reception points with the uplink configuration, the one or more respective transmissions of the plurality of physical uplink shared channel transmissions based, at least partially, on the sixth indication of the at least one waveform.

The means configured to perform transmitting of the plurality of physical uplink shared channel transmissions may comprise means configured to perform: transmitting, to a first transmission and reception point, a first physical uplink shared transmission with a first waveform; waveform switching; and transmitting, to a second transmission and reception point, a second physical uplink shared transmission with a second waveform, wherein the first transmission and reception point may be at least partially different from the second transmission and reception point, wherein the first waveform may be at least partially different from the second waveform.

The transmitting to the first transmission and reception point and the transmitting to the second transmission and reception point may be performed with consecutive uplink transmissions.

The means may be further configured to perform: receiving, from the base station, a request to report the capability related to the multiple transmission and reception point operation, wherein the capability related to the multiple transmission and reception point operation may be transmitted in response to the received request.

The means may be further configured to perform: determining at least one instant for waveform switching for the multiple transmission and reception point operation, wherein the at least one instant may be determined based on at least one of: a path loss for a transmission and reception point, a first threshold associated with the path loss for the transmission and reception point, a first variation associated with the path loss for the transmission and reception point, a maximum path loss for a plurality of transmission and reception points, a power headroom for the transmission and reception point, a second threshold associated with the power headroom for the transmission and reception point, a second variation associated with the power headroom for the transmission and reception point, or a minimum power headroom for the transmission and reception point; and transmitting, to the base station, a seventh indication of the at least one instant for waveform switching.

The means may be further configured to perform: receiving, from the base station, an eighth indication of at least one instant for waveform switching.

The plurality of physical uplink shared channel transmissions may be ordered for the multiple transmission and reception point operation based on a required power to sustain the at least one target power change.

The relative power tolerance associated with the at least one target power change may comprise at least one of: a maximum relative power tolerance, or a minimum relative power tolerance.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause transmitting, to a base station, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; cause receiving, from the base station, of a sixth indication of at least one waveform for use during one or more respective transmissions of a plurality of physical uplink shared channel transmissions; and cause receiving, from the base station, of an uplink configuration for the plurality of physical uplink shared channel transmissions.

In accordance with one example embodiment, a non-transitory computer-readable medium comprising program instructions stored thereon for performing at least the following: causing transmitting, to a base station, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; causing receiving, from the base station, of a sixth indication of at least one waveform for use during one or more respective transmissions of a plurality of physical uplink shared channel transmissions; and causing receiving, from the base station, of an uplink configuration for the plurality of physical uplink shared channel transmissions.

In accordance with another example embodiment, a non-transitory program storage device readable by a machine may be provided, tangibly embodying instructions executable by the machine for performing operations, the operations comprising: causing transmitting, to a base station, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; causing receiving, from the base station, of a sixth indication of at least one waveform for use during one or more respective transmissions of a plurality of physical uplink shared channel transmissions; and causing receiving, from the base station, of an uplink configuration for the plurality of physical uplink shared channel transmissions.

In accordance with another example embodiment, a non-transitory computer-readable medium comprising instructions that, when executed by an apparatus, cause the apparatus to perform at least the following: causing transmitting, to a base station, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; causing receiving, from the base station, of a sixth indication of at least one waveform for use during one or more respective transmissions of a plurality of physical uplink shared channel transmissions; and causing receiving, from the base station, of an uplink configuration for the plurality of physical uplink shared channel transmissions.

A computer implemented system comprising: at least one processor and at least one non-transitory memory storing instructions that, when executed by the at least one processor, cause the system at least to perform: causing transmitting, to a base station, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; causing receiving, from the base station, of a sixth indication of at least one waveform for use during one or more respective transmissions of a plurality of physical uplink shared channel transmissions; and causing receiving, from the base station, of an uplink configuration for the plurality of physical uplink shared channel transmissions.

A computer implemented system comprising: means for causing transmitting, to a base station, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; means for causing receiving, from the base station, of a sixth indication of at least one waveform for use during one or more respective transmissions of a plurality of physical uplink shared channel transmissions; and means for causing receiving, from the base station, of an uplink configuration for the plurality of physical uplink shared channel transmissions.

In accordance with one example embodiment, an apparatus may comprise: at least one processor; and at least one memory storing instructions that, when executed by the at least one processor, cause the apparatus at least to: receive, from a user equipment, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and/or reception point operation; determine at least one waveform for use during one or more respective transmissions of a plurality of physical uplink shared channel transmissions based, at least partially, on the received capability; transmit, to the user equipment, a sixth indication of the at least one determined waveform; and transmit, to the user equipment, an uplink configuration for the plurality of physical uplink shared channel transmissions.

The example apparatus may be further configured to: receive one or more respective transmissions of the plurality of physical uplink shared channel transmissions based on the uplink configuration using respective ones of the at least one waveform.

The example apparatus may be further configured to: transmit, to the user equipment, a request to report the capability related to the multiple transmission and reception point operation.

The example apparatus may be further configured to: receive, from the user equipment, a seventh indication of at least one instant for waveform switching.

The example apparatus may be further configured to: determine at least one instant for waveform switching for the multiple transmission and reception point operation, wherein the at least one instant may be determined based on at least one of: a path loss for a transmission and reception point, a first threshold associated with the path loss for the transmission and reception point, a first variation associated with the path loss for the transmission and reception point, a maximum path loss for a plurality of transmission and reception points, a power headroom for the transmission and reception point, a second threshold associated with the power headroom for the transmission and reception point, a second variation associated with the power headroom for the transmission and reception point, or a minimum power headroom for the transmission and reception point; and transmit, to the user equipment, an eighth indication of the at least one instant for waveform switching.

The plurality of physical uplink shared channel transmissions may be ordered for the multiple transmission and reception point operation based on a required power to sustain the at least one target power change.

The relative power tolerance associated with the at least one target power change may comprise at least one of: a maximum relative power tolerance, or a minimum relative power tolerance.

In accordance with one aspect, an example method may be provided comprising: receiving, with a base station from a user equipment, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; transmitting, to the user equipment, a sixth indication of the at least one determined waveform; and transmitting, to the user equipment, an uplink configuration for the plurality of physical uplink shared channel transmissions.

The example method may further comprise: receiving one or more respective transmissions of the plurality of physical uplink shared channel transmissions based on the uplink configuration using respective ones of the at least one waveform.

The example method may further comprise: transmitting, to the user equipment, a request to report the capability related to the multiple transmission and reception point operation.

The example method may further comprise: receiving, from the user equipment, a seventh indication of at least one instant for waveform switching.

The example method may further comprise: determining at least one instant for waveform switching for the multiple transmission and reception point operation, wherein the at least one instant may be determined based on at least one of: a path loss for a transmission and reception point, a first threshold associated with the path loss for the transmission and reception point, a first variation associated with the path loss for the transmission and reception point, a maximum path loss for a plurality of transmission and reception points, a power headroom for the transmission and reception point, a second threshold associated with the power headroom for the transmission and reception point, a second variation associated with the power headroom for the transmission and reception point, or a minimum power headroom for the transmission and reception point; and transmitting, to the user equipment, an eighth indication of the at least one instant for waveform switching.

The plurality of physical uplink shared channel transmissions may be ordered for the multiple transmission and reception point operation based on a required power to sustain the at least one target power change.

The relative power tolerance associated with the at least one target power change may comprise at least one of: a maximum relative power tolerance, or a minimum relative power tolerance.

In accordance with one example embodiment, an apparatus may comprise: circuitry configured to perform: receiving, from a user equipment, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; circuitry configured to perform: determining at least one waveform for use during one or more respective transmissions of a plurality of physical uplink shared channel transmissions based, at least partially, on the received capability; circuitry configured to perform: transmitting, to the user equipment, a sixth indication of the at least one determined waveform; and circuitry configured to perform: transmitting, to the user equipment, an uplink configuration for the plurality of physical uplink shared channel transmissions.

In accordance with one example embodiment, an apparatus may comprise: processing circuitry; memory circuitry including computer program code, the memory circuitry and the computer program code configured to, with the processing circuitry, enable the apparatus to: receive, from a user equipment, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and/or reception point operation; determine at least one waveform for use during one or more respective transmissions of a plurality of physical uplink shared channel transmissions based, at least partially, on the received capability; transmit, to the user equipment, a sixth indication of the at least one determined waveform; and transmit, to the user equipment, an uplink configuration for the plurality of physical uplink shared channel transmissions.

In accordance with one example embodiment, an apparatus may comprise means for performing: receiving, from a user equipment, a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; transmitting, to the user equipment, a sixth indication of the at least one determined waveform; and transmitting, to the user equipment, an uplink configuration for the plurality of physical uplink shared channel transmissions.

The means may be further configured to perform: receiving one or more respective transmissions of the plurality of physical uplink shared channel transmissions based on the uplink configuration using respective ones of the at least one waveform.

The means may be further configured to perform: transmitting, to the user equipment, a request to report the capability related to the multiple transmission and reception point operation.

The means may be further configured to perform: receiving, from the user equipment, a seventh indication of at least one instant for waveform switching.

The means may be further configured to perform: determining at least one instant for waveform switching for the multiple transmission and reception point operation, wherein the at least one instant may be determined based on at least one of: a path loss for a transmission and reception point, a first threshold associated with the path loss for the transmission and reception point, a first variation associated with the path loss for the transmission and reception point, a maximum path loss for a plurality of transmission and reception points, a power headroom for the transmission and reception point, a second threshold associated with the power headroom for the transmission and reception point, a second variation associated with the power headroom for the transmission and reception point, or a minimum power headroom for the transmission and reception point; and transmitting, to the user equipment, an eighth indication of the at least one instant for waveform switching.

The plurality of physical uplink shared channel transmissions may be ordered for the multiple transmission and reception point operation based on a required power to sustain the at least one target power change.

The relative power tolerance associated with the at least one target power change may comprise at least one of: a maximum relative power tolerance, or a minimum relative power tolerance.

In accordance with one example embodiment, a non-transitory computer-readable medium comprising instructions stored thereon which, when executed with at least one processor, cause the at least one processor to: cause receiving, from a user equipment, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determine at least one waveform for use during one or more respective transmissions of a plurality of physical uplink shared channel transmissions based, at least partially, on the received capability; cause transmitting, to the user equipment, of a sixth indication of the at least one determined waveform; and cause transmitting, to the user equipment, of an uplink configuration for the plurality of physical uplink shared channel transmissions.

In accordance with one example embodiment, a non-transitory computer-readable medium comprising program instructions stored thereon for performing at least the following: causing receiving, from a user equipment, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; causing transmitting, to the user equipment, of a sixth indication of the at least one determined waveform; and causing transmitting, to the user equipment, of an uplink configuration for the plurality of physical uplink shared channel transmissions.

In accordance with another example embodiment, a non-transitory program storage device readable by a machine may be provided, tangibly embodying instructions executable by the machine for performing operations, the operations comprising: causing receiving, from a user equipment, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; causing transmitting, to the user equipment, of a sixth indication of the at least one determined waveform; and causing transmitting, to the user equipment, of an uplink configuration for the plurality of physical uplink shared channel transmissions.

In accordance with another example embodiment, a non-transitory computer-readable medium comprising instructions that, when executed by an apparatus, cause the apparatus to perform at least the following: causing receiving, from a user equipment, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; causing transmitting, to the user equipment, of a sixth indication of the at least one determined waveform; and causing transmitting, to the user equipment, of an uplink configuration for the plurality of physical uplink shared channel transmissions.

A computer implemented system comprising: at least one processor and at least one non-transitory memory storing instructions that, when executed by the at least one processor, cause the system at least to perform: causing receiving, from a user equipment, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; determining at least one waveform for use during one or more respective transmissions of a plurality of physical uplink shared channel transmissions based, at least partially, on the received capability; causing transmitting, to the user equipment, of a sixth indication of the at least one determined waveform; and causing transmitting, to the user equipment, of an uplink configuration for the plurality of physical uplink shared channel transmissions.

A computer implemented system comprising: means for causing receiving, from a user equipment, of a capability related to multiple transmission and reception point operation, which may comprise at least one of: a first indication of one or more power amplifier configurations, a second indication of at least one first time duration to reach at least one target power change, a third indication of a second time duration during which a waveform is to be maintained, a fourth indication of a relative power tolerance associated with the at least one target power change, or a fifth indication of a capability for achieving a predetermined relative power tolerance during a predetermined time duration during the multiple transmission and reception point operation; means for determining at least one waveform for use during one or more respective transmissions of a plurality of physical uplink shared channel transmissions based, at least partially, on the received capability; means for causing transmitting, to the user equipment, of a sixth indication of the at least one determined waveform; and means for causing transmitting, to the user equipment, of an uplink configuration for the plurality of physical uplink shared channel transmissions.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for performing:
transmitting, to a base station, a capability related to multiple transmission and reception point operation, comprising at least one of:
a first indication of one or more power amplifier configurations,
a second indication of at least one first time duration to reach at least one target power change,
a third indication of a second time duration during which a waveform is to be maintained,
a fourth indication of a relative power tolerance associated with the at least one target power change, or
a fifth indication of a capability for achieving a predetermined relative power tolerance during a predetermined time duration during the multiple transmission and reception point operation;
receiving, from the base station, a sixth indication of at least one waveform for use during one or more respective transmissions of a plurality of physical uplink shared channel transmissions; and
receiving, from the base station, an uplink configuration for the plurality of physical uplink shared channel transmissions.

2. The apparatus of claim 1, wherein the means are further configured to perform:
transmitting, to at least one of multiple transmission and reception points with the uplink configuration, the one or more respective transmissions of the plurality of physical uplink shared channel transmissions based, at least partially, on the sixth indication of the at least one waveform.

3. The apparatus of claim 2, wherein the means configured to perform transmitting of the plurality of physical uplink shared channel transmissions comprises means configured to perform:
transmitting, to a first transmission and reception point, a first physical uplink shared transmission with a first waveform;
waveform switching; and
transmitting, to a second transmission and reception point, a second physical uplink shared transmission with a second waveform,
wherein the first transmission and reception point is at least partially different from the second transmission and reception point, wherein the first waveform is at least partially different from the second waveform.

4. The apparatus of claim 3, wherein the transmitting to the first transmission and reception point and the transmitting to the second transmission and reception point are performed with consecutive uplink transmissions.

5. The apparatus of any of claims 1 through 4, wherein the means are further configured to perform:
receiving, from the base station, a request to report the capability related to the multiple transmission and reception point operation, wherein the capability related to the multiple transmission and reception point operation is transmitted in response to the received request.

6. The apparatus of any of claims 1 through 5, wherein the means are further configured to perform:
determining at least one instant for waveform switching for the multiple transmission and reception point operation, wherein the at least one instant is determined based on at least one of:
a path loss for a transmission and reception point,
a first threshold associated with the path loss for the transmission and reception point,
a first variation associated with the path loss for the transmission and reception point,
a maximum path loss for a plurality of transmission and reception points,
a power headroom for the transmission and reception point,
a second threshold associated with the power headroom for the transmission and reception point,
a second variation associated with the power headroom for the transmission and reception point, or
a minimum power headroom for the transmission and reception point; and
transmitting, to the base station, a seventh indication of the at least one instant for waveform switching.

7. The apparatus of any of claims 1 through 5, wherein the means are further configured to perform:
receiving, from the base station, an eighth indication of at least one instant for waveform switching.

8. The apparatus of any of claims 1 through 7, wherein the plurality of physical uplink shared channel transmissions is ordered for the multiple transmission and reception point operation based on a required power to sustain the at least one target power change.

9. The apparatus of any of claims 1 through 8, wherein the relative power tolerance associated with the at least one target power change comprises at least one of:
a maximum relative power tolerance, or
a minimum relative power tolerance.

10. A method comprising:
transmitting, with a user equipment to a base station, a capability related to multiple transmission and reception point operation, comprising at least one of:
a first indication of one or more power amplifier configurations,
a second indication of at least one first time duration to reach at least one target power change,
a third indication of a second time duration during which a waveform is to be maintained,
a fourth indication of a relative power tolerance associated with the at least one target power change, or
a fifth indication of a capability for achieving a predetermined relative power tolerance during a predetermined time duration during the multiple transmission and reception point operation;
receiving, from the base station, a sixth indication of at least one waveform for use during one or more respective transmissions of a plurality of physical uplink shared channel transmissions; and
receiving, from the base station, an uplink configuration for the plurality of physical uplink shared channel transmissions.

11. An apparatus comprising means for performing:
receiving, from a user equipment, a capability related to multiple transmission and reception point operation, comprising at least one of:
a first indication of one or more power amplifier configurations,
a second indication of at least one first time duration to reach at least one target power change,
a third indication of a second time duration during which a waveform is to be maintained,
a fourth indication of a relative power tolerance associated with the at least one target power change, or
a fifth indication of a capability for achieving a predetermined relative power tolerance during a predetermined time duration during the multiple transmission and reception point operation;
determining at least one waveform for use during one or more respective transmissions of a plurality of physical uplink shared channel transmissions based, at least partially, on the received capability;
transmitting, to the user equipment, a sixth indication of the at least one determined waveform; and transmitting, to the user equipment, an uplink configuration for the plurality of physical uplink shared channel transmissions.

12. The apparatus of claim 11, wherein the means are further configured to perform:
receiving one or more respective transmissions of the plurality of physical uplink shared channel transmissions based on the uplink configuration using respective ones of the at least one waveform.

13. The apparatus of claim 11 or 12, wherein the means are further configured to perform:
transmitting, to the user equipment, a request to report the capability related to the multiple transmission and reception point operation.

14. The apparatus of any of claims 11 through 13, wherein the means are further configured to perform:
receiving, from the user equipment, a seventh indication of at least one instant for waveform switching.

15. A method comprising:
receiving, with a base station from a user equipment, a capability related to multiple transmission and reception point operation, comprising at least one of:
a first indication of one or more power amplifier configurations,
a second indication of at least one first time duration to reach at least one target power change,
a third indication of a second time duration during which a waveform is to be maintained,
a fourth indication of a relative power tolerance associated with the at least one target power change, or
a fifth indication of a capability for achieving a predetermined relative power tolerance during a predetermined time duration during the multiple transmission and reception point operation;
determining at least one waveform for use during one or more respective transmissions of a plurality of physical uplink shared channel transmissions based, at least partially, on the received capability;
transmitting, to the user equipment, a sixth indication of the at least one determined waveform; and
transmitting, to the user equipment, an uplink configuration for the plurality of physical uplink shared channel transmissions.
